# EUROPEAN PATENT APPLICATION

(11) **EP 4 712 025 A1**
(43) Date of publication of application: **18.03.2026**
(21) Application number: 24199904.4
(22) Date of filing: 12.09.2024
(51) Int. Cl.: G06T 7/80

(54) **CALIBRATING A SECOND VEHICLE CAMERA BASED ON CALIBRATION INFORMATION OF A CALIBRATED FIRST CAMERA IN A CAMERA HOUSING**

(71) Applicant: Volvo Truck Corporation, 405 08 Göteborg (SE)
(72) Inventor: BERNE, Nicolas, 38540 HEYRIEUX (FR); DAVIS, Azize, 423 56 TORSLANDA (SE)
(74) Representative: Ström & Gulliksson AB

(57) **Abstract**

A vehicle includes an imaging system including a first camera and a second camera in a housing mounted to the vehicle, and a processing circuit that uses a first calibration information obtained from a calibration of the first camera to generate a second calibration information to calibrate the second camera. The first calibration information identifies a first position difference between a position of the first camera and a reference position, and also identifies a first orientation difference between an orientation of the first camera and a reference orientation. The second calibration information includes a second position difference between the second camera and the reference position, and a second orientation difference between the second camera and the reference orientation. Generating the second calibration information includes combining the first calibration information with translation information providing a position difference and an orientation difference between the first camera and the second camera.

## Description

### TECHNICAL FIELD

The disclosure relates generally to improving vehicle safety. In particular aspects, the disclosure relates to a system for calibrating an uncalibrated camera in a camera housing for an imaging system in a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Cameras may be provided on vehicles to increase driver awareness of their surroundings and to provide image information to automated driver assistance functions in vehicles, such as blind-spot detectors, backup sensors, and automatic braking. Cameras may be particularly helpful in larger vehicles, around which driver visibility may be limited. The image information provided by a camera may be misleading, unhelpful, or difficult to interpret, depending on the positioning and direction of the camera. Since image information may be used to control automated driver assistance functions to improve vehicle safety, it is important for the imaging system to provide expected image information (e.g., from an expected perspective relative to the vehicle). Camera calibration ensures that the image information provided to the driver and/or to image processing software is expected image information. However, the task of performing a calibration consumes time and other resources, which increases cost.

### SUMMARY

Aspects disclosed herein include calibrating a second vehicle camera based on calibration information of a calibrated first camera in a camera housing. Methods of calibrating a camera in a same housing as a calibrated camera are also disclosed. An imaging system of a vehicle includes on or more cameras providing image information to a driver or image processor for vehicle related functions. Cameras secured in a camera housing mounted on a vehicle are expected to provide image information from a particular view of the vehicle surroundings, from a particular perspective and orientation (e.g., relative to the vehicle). For example, a vehicle can include multiple cameras that are supported in a common housing, but oriented differently in the housing to capture images in different directions to provide imaging information in different directions for vehicle related functions. For example, a second camera be a camera-monitoring system (CMS) camera that may be required to meet a different operating standard than an advanced driving assistance system (ADAS) camera and may be used for different purposes than the ADAS camera. There can be non-uniformities in camera housings due to manufacturing processes, in addition to variations involving mounting the housings to vehicles. A result of such non-uniformities is that the image information from cameras in a housing may not be as expected due to the camera being in an unexpected position and/or orientation. A camera position is defined as its position in a three-dimensional (3D) space, which may be measured relative to the vehicle. A difference between an actual camera position and a reference position can be identified by distances in the three dimensions. A camera orientation is the direction of view (e.g., focal point) relative to the reference position, which may be defined as angles relative to a set of axes (X-Y-Z) of a 3D space. A difference between an actual camera orientation and a reference orientation may also be defined as angles, referred to as pitch, yaw, and roll, as known to aviators. A calibration process can determine the difference between a camera position and the reference position, and the difference between a camera orientation and the reference orientation. The calibration information can be used to calibrate the camera, which includes adjusting the image information provided by the camera to provide the view expected by the driver and/or image processor. Without calibration, the image information can be inaccurate or misleading, which can reduce the safety benefits provided by an imaging system on a vehicle. Also, if multiple cameras are provided in a vehicle, each of the cameras need to be calibrated, which can be time consuming and expensive.

In this regard, to reduce calibration time and expense, in exemplary aspects disclosed herein, a vehicle is provided that includes an imaging system including a first camera and a second camera in a housing mounted to the vehicle. The vehicle includes a processing circuit that uses a first calibration information obtained from a calibration of the first camera to generate a second calibration information to calibrate the second camera. The first calibration information identifies a first position difference between an actual position of the first camera and a reference position and also identifies a first orientation difference between an actual orientation of the first camera and a reference orientation. The second calibration information includes a second position difference between an actual position of the second camera and the reference position and identifies a second orientation difference between an actual orientation of the second camera and the reference orientation. Generating the second calibration information includes combining the first calibration information with translation information providing a position difference and an orientation difference between the first camera and the second camera. Calibrating the second camera in this manner, rather than by known calibration processes, improves the accuracy of image information from the second camera, which improves vehicle safety, in less time and expense. In some examples, the translation information may be manufacturing (e.g., computer aided design (CAD)) information of the camera housing or measurements of an actual housing.

According to a first aspect of the disclosure, a vehicle including an imaging system is disclosed. The imaging system includes a housing mounted to the vehicle, a first camera disposed in a first position in the housing and a first orientation relative to the first position, a second camera disposed in a second position in the housing and a second orientation relative to the second position, and a processing circuit configured to receive a first calibration information for the first camera. The processing circuit is further configured to receive translation information including a position difference between the first position of the first camera and the second position of the second camera, and an orientation difference between the first orientation and the second orientation. The processing circuit is further configured to generate, based on the first calibration information and the translation information, a second calibration information for calibrating the second camera.

The first aspect of the disclosure may seek to improve the image information provided by a second camera in a housing with a calibrated first camera. A technical benefit may include improving the accuracy of image information from the second camera, which improves vehicle safety, and avoids the need for time-consuming and costly methods of calibrating the second camera.

Optionally in some examples, including in at least one preferred example, the second camera is configured to receive second image information, and the processing circuit is further configured to generate calibrated second image information based on the second image information and the second calibration information. A technical benefit may include adjusting the image information from an uncalibrated camera using the calibration information generated in the first camera.

Optionally in some examples, including in at least one preferred example, the processing circuit is further configured to generate the calibrated second image including a target area of the second image information, and center the target area in the calibrated image based on the second calibration information. A technical benefit may include improving the image information obtained from the second camera based on image information from the first camera.

Optionally in some examples, including in at least one preferred example, the first camera includes an advanced driving assistance system (ADAS) camera, and the second camera includes a camera-monitor system (CMS) camera. A technical benefit may include improving the image information of a CMS camera by using the calibration information of an ADAS camera.

Optionally in some examples, including in at least one preferred example, the translation information includes design information for manufacturing the housing. A technical benefit may include using pre-existing information rather than incurring the cost of calibration to improve image information.

Optionally in some examples, including in at least one preferred example, the processing circuit is further configured to receive first image information from the first camera and generate translation information based on the first image information and the second image information. A technical benefit may include developing the translation information in the processing circuit as opposed to relying on translation information from an external source.

Optionally in some examples, including in at least one preferred example, the position difference includes distances in three directions that are orthogonal to each other between the first position and the second position. A technical benefit may include using these distances to determine the position of the second camera from the position of the first camera to determine differences in perspective.

Optionally in some examples, including in at least one preferred example, the orientation difference includes a pitch, a yaw, and a roll angle between the first orientation and the second orientation. A technical benefit may include using these angles to determine the orientation of the second camera from the orientation of the first camera.

Optionally in some examples, including in at least one preferred example, the second position of the second camera includes a position difference between the first position of the first camera and a reference position, and a position difference between the second position of the second camera and the first position of the first camera. A technical benefit may include using known position difference information of the first camera to determine a position of the second camera.

Optionally in some examples, including in at least one preferred example, the second orientation of the second camera includes an orientation difference between the first camera and a reference orientation, and an orientation difference between the second camera and the first camera. A technical benefit may include using a known orientation of the first camera to determine an orientation of the second camera without calibration.

Optionally in some examples, including in at least one preferred example, the housing is attached to one of a driver side and a passenger side of the vehicle. A technical benefit may include improving safety by providing views adjacent to the vehicle.

According to a second aspect of the disclosure, a method for calibrating a camera is disclosed. The method includes receiving a first calibration information for a first camera disposed in a first position in a housing and having a first orientation. The method further includes receiving translation information including a position difference between the first position of the first camera and a second position of a second camera disposed in the housing, and an orientation difference between the first orientation of the first camera and a second orientation of the second camera. The method further includes generating, based on the first calibration information and the translation information, a second calibration information for calibrating the second camera.

The second aspect of the disclosure may seek to provide a method for improving the image information of a second camera in a housing without calibration. A technical benefit may include improving the image information of the second camera based on a calibrated first camera.

Optionally in some examples, including in at least one preferred example, the method further includes receiving a second image information from the second camera, and generating a calibrated image based on the second image information and the second calibration information. A technical benefit may include improving the image information of the second camera based on the calibration information determined for the second camera without calibration.

Optionally in some examples, including in at least one preferred example, the method further includes generating the calibrated image based on a target area of the second image information, and centering the target area in the calibrated image based on the second calibration information. A technical benefit may include improving the image information obtained from the second camera based on image information from the first camera.

Optionally in some examples, including in at least one preferred example, the method further includes extracting the translation information from design information for manufacturing the housing. A technical benefit may include using pre-existing information rather than incurring the cost of calibration to improve image information.

Optionally in some examples, including in at least one preferred example, the method further includes examining the housing to determine the translation information. A technical benefit may include avoiding the need for calibration by examining the housing

Optionally in some examples, including in at least one preferred example, the method further includes determining the translation information based on differences between the first image information and the second image information. A technical benefit may include avoiding the need for calibration by comparing the images of the two cameras.

Optionally in some examples, including in at least one preferred example, the method further includes determining a position difference between the first position of the first camera and a reference position, and determining a position difference between the second position of the second camera and the first position of the first camera. A technical benefit may include using known position differences of the first camera to identify a position of the second camera.

Optionally in some examples, including in at least one preferred example, the method further includes determining an orientation difference between the first orientation of the first camera and a reference orientation, and determining an orientation difference between the second camera and the first camera. A technical benefit may include using known orientation information of the first camera to determine an orientation of the second camera.

According to a third aspect of the disclosure, a non-transitory computer-readable storage medium is disclosed. The non-transitory computer-readable storage medium includes instructions, which when executed by a processing circuit, cause the processing circuit to receive a first calibration information for a first camera disposed in a first position in a housing and having a first orientation. The instructions further cause the processing circuit to receive translation information including a position difference between the first position of the first camera and a second position of a second camera disposed in the housing, and an orientation difference between the first orientation of the first camera and a second orientation of the second camera. The instructions further cause the processing circuit to generate, based on the first calibration information and the translation information, a second calibration information for calibrating the second camera.

The third aspect of the disclosure may seek to improve the image information provided by a second camera in a housing with a calibrated first camera. A technical benefit may include avoiding the need to calibrate the second camera.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGS. 1A** and **1B** are a front view and a side view, respectively, of an exemplary vehicle including an imaging system including two cameras in a housing and processing circuity to calibrate one camera based on calibration information of the other camera;
**FIG. 2** is an example of the housings in **FIGS. 1A** and **1B****,** in which cameras may be collocated and one may be calibrated based on calibration information of another;
**FIG. 3** is an illustration of another example of a housing as shown in **FIGS. 1A****,** **1B****,** and **2****,** to show relative positions of two cameras in a housing and the respective orientations from which they receive image information;
**FIG. 4** is a flow chart of a method of calibrating a second camera based on calibration information of a first calibrated camera collocated in a housing;
**FIG. 5** is an example of overlaid images that may be received in a camera due to manufacturing tolerances of a housing, illustrating the need for camera calibration;
**FIG. 6** is a schematic diagram of a system for calibrating a first camera based on calibration information of a second camera collocated in a housing, as disclosed herein; and
**FIG. 7** is a view of a computer system for implementing details disclosed herein and may be the processing circuit in **FIGS. 1A****,** **1B****,** and **6****.**

### DETAILED DESCRIPTION

The detailed description set forth below provides information and examples of the disclosed technology with sufficient detail to enable those skilled in the art to practice the disclosure.

Aspects disclosed herein include calibrating a second vehicle camera based on calibration information of a calibrated first camera in a camera housing. Methods of calibrating a camera in a same housing as a calibrated camera are also disclosed. An imaging system of a vehicle includes on or more cameras providing image information to a driver or image processor for vehicle related functions. Cameras secured in a camera housing mounted on a vehicle are expected to provide image information from a particular view of the vehicle surroundings, from a particular perspective and orientation (e.g., relative to the vehicle). For example, a vehicle can include multiple cameras that are supported in a common housing, but oriented differently in the housing to capture images in different directions to provide imaging information in different directions for vehicle related functions. For example, a second camera be a camera-monitoring system (CMS) camera that may be required to meet a different operating standard than an advanced driving assistance system (ADAS) camera and may be used for different purposes than the ADAS camera. There can be non-uniformities in camera housings due to manufacturing processes, in addition to variations involving mounting the housings to vehicles. A result of such non-uniformities is that the image information from cameras in a housing may not be as expected due to the camera being in an unexpected position and/or orientation. A camera position is defined as its position in a three-dimensional (3D) space, which may be measured relative to the vehicle. A difference between an actual camera position and a reference position can be identified by distances in the three dimensions. A camera orientation is the direction of view (e.g., focal point) relative to the reference position, which may be defined as angles relative to a set of axes (X-Y-Z) of a 3D space. A difference between an actual camera orientation and a reference orientation may also be defined as angles, referred to as pitch, yaw, and roll, as known to aviators. A calibration process can determine the difference between a camera position and the reference position, and the difference between a camera orientation and the reference orientation. The calibration information can be used to calibrate the camera, which includes adjusting the image information provided by the camera to provide the view expected by the driver and/or image processor. Without calibration, the image information can be inaccurate or misleading, which can reduce the safety benefits provided by an imaging system on a vehicle. Also, if multiple cameras are provided in a vehicle, each of the cameras need to be calibrated, which can be time consuming and expensive.

In this regard, to reduce calibration time and expense, in exemplary aspects disclosed herein, a vehicle is provided that includes an imaging system including a first camera and a second camera in a housing mounted to the vehicle. The vehicle includes a processing circuit that uses a first calibration information obtained from a calibration of the first camera to generate a second calibration information to calibrate the second camera. The first calibration information identifies a first position difference between an actual position of the first camera and a reference position and also identifies a first orientation difference between an actual orientation of the first camera and a reference orientation. The second calibration information includes a second position difference between an actual position of the second camera and the reference position and identifies a second orientation difference between an actual orientation of the second camera and the reference orientation. Generating the second calibration information includes combining the first calibration information with translation information providing a position difference and an orientation difference between the first camera and the second camera. Calibrating the second camera in this manner, rather than by known calibration processes, improves the accuracy of image information from the second camera, which improves vehicle safety, in less time and expense. In some examples, the translation information may be manufacturing (e.g., computer aided design (CAD)) information of the camera housing or measurements of an actual housing.

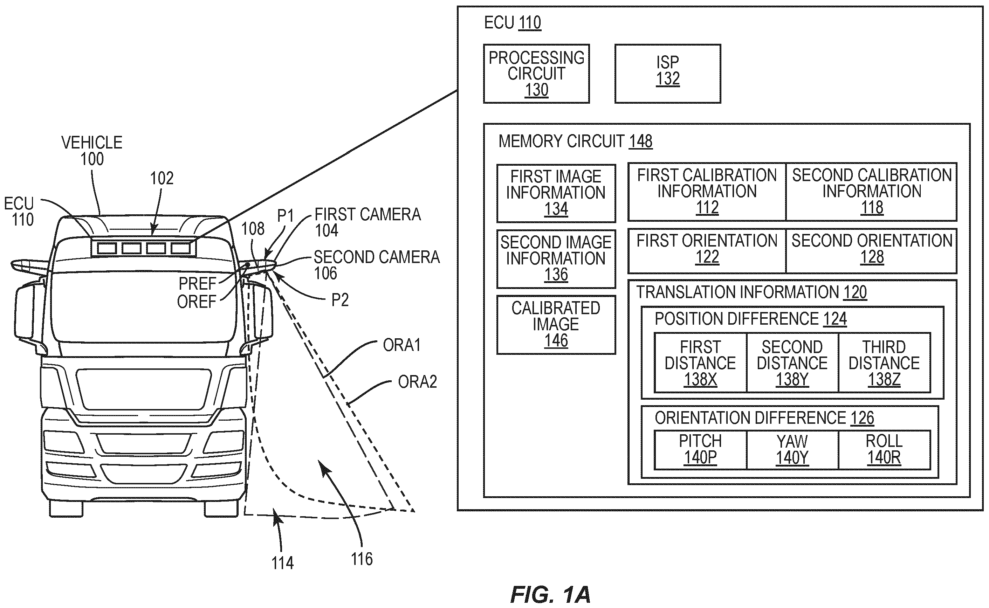

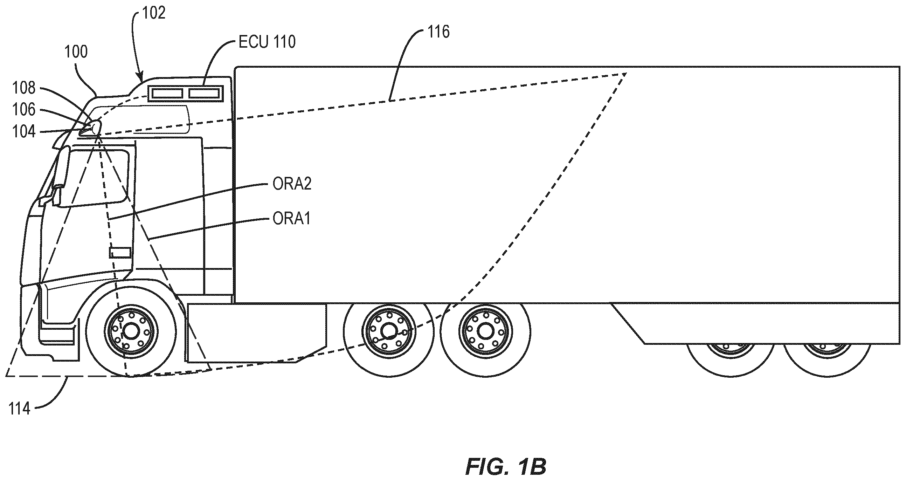

**FIGS. 1A** and **1B** are illustrations of a front view and a side view, respectively, of an exemplary vehicle **100** (e.g., a tractor-trailer). The vehicle **100** includes an imaging system **102** including a first camera **104** and a second camera **106** that are both disposed in a housing **108** on the vehicle **100.**

It has become more common for vehicles, such as the vehicle **100,** to include cameras for improved safety. Some vehicle cameras adhere to certain safety standards, which may be required to meet road safety regulations, for example. In this regard, in some examples, the first camera **104** may be an advanced driving assistance system (ADAS) camera that may be calibrated according to a known method. Calibration of an ADAS camera may employ a specialized calibration facility and/or a calibration apparatus, as well as calibration software that may be executed in an electronic control unit (ECU) **110** in the vehicle **100** or an external computing device. The calibration process generates a first calibration information **112,** which may be used in the imaging system **102** to adjust the information provided by the first camera to provide an expected view. In some examples, the second camera **106** may be a camera-monitoring system (CMS) camera that may be required to meet a different operating standard than the ADAS camera and may be used for different purposes than the ADAS camera. Using a common housing for both cameras avoids the need for a second housing, which simplifies manufacturing and reduces vehicle cost. A common housing also allows both cameras to have the benefit of an optimum viewpoint from the vehicle.

As shown in **FIGS. 1A** and **1B****,** a first field of view **114** for the first camera **104** may be different from a second field of view **116** of the second camera **106.** This may be because the first camera **104** and the second camera **106** are employed for different purposes (e.g., ADAS vs CMS). Even though the first camera **104** may be properly calibrated, safety of the vehicle **100** may be further improved by the second camera **106.** However, added benefits that may be provided by the second camera **106** may only be realized if the second camera **106** is also calibrated. Calibrating the second camera **106** improves the accuracy of the image information provided by the camera, which improves vehicle safety, but calibration methods may be cost-prohibitive and time-consuming. Thus, calibrating the second camera **106** would further increase the production costs of the vehicle **100.**

In this regard, in an exemplary aspect, a second calibration information **118** of the second camera **106** may be generated using the first calibration information **112** of the first camera **104** in combination with translation information **120.** The first calibration information **112** identifies a first position **P1** of the first camera **104** and a first orientation **122** of the first camera **104** relative to a reference position **PREF** and a reference orientation **OREF.** The translation information **120** identifies a position difference **124** between the first position **P1** and a second position **P2** of the second camera **106,** and an orientation difference **126** between the first orientation **122** of the first camera **104** and a second orientation **128** of the second camera **106.** Thus, the second calibration information **118** may be generated by combining the first calibration information **112** and the translation information **120.**

In addition to the first camera **104** and the second camera **106,** the imaging system **102** also includes a processing circuit **130,** that may be the electronic control unit (ECU) **110,** for example, and may include an image signal processor (ISP) **132.** The ISP **132** is programmable to execute computer instructions (e.g., software instructions, firmware instructions) for analyzing and responding to first image information **134** received from the first camera **104** and second image information **136** received from the second camera **106.** The ECU **110** may communicate with the first camera **104** and the second camera **106** wirelessly or by wired connections, or both. The ECU **110** may be configured to improve safety of the vehicle **100** and nearby traffic in response to the received first and second image information **134, 136,** which may include generating signals to control functions of the vehicle **100,** such as warnings and information to the driver and automated driver assistance functions.

The first calibration information **112** may be used by the ECU **110** to calibrate the first camera **104,** which is to adjust the first image information **134** received from the first camera **104,** based on the first orientation **122,** to generate a calibrated image **146** having a view corresponding to the reference position PREF and the reference orientation **OREF,** for example. The ECU **110** may also be configured to calibrate the second camera **106** based on the first calibration information **112.** In some examples, the ECU **110** may use differences between the first image information **134** and the second image information **136** to determine the translation information **120.**

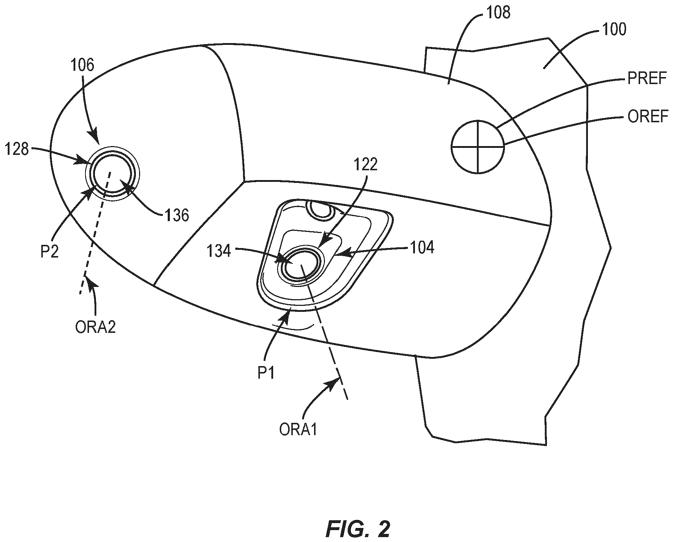

In this regard, **FIG. 2** is an example of the housing **108** in **FIGS. 1A-1B** on a side of the vehicle **100** viewed by the first camera **104** and the second camera 106, which are collocated in the housing **108.** Features of **FIG. 2** that are common to features in **FIGS. 1A-****1B** are labeled the same. In this context, the term "collocated" refers to being set or placed together, including side by side, in the housing **108.** In particular, the first camera **104** being collocated with the second camera **106** indicates that they are both supported in the same housing **108** and may be similarly displaced from the reference position **PREF** and the reference orientation **OREF.** The first camera **104** and the second camera **106** disposed in the housing **108** may be separated by less than 12 inches or 30.5 centimeters, for example, and may be separated by less than 6 inches or 15.25 centimeters.

The housing **108** supports the first camera **104** fixedly in the first position **P1** and supports the second camera **106** fixedly in the second position **P2.** The position **P2** and the second orientation **128** of the second camera **106** are different from the first position **P1** and the first orientation **122** of the first camera **104** as determined by their relative positions in the housing **108.** The housing **108** may be any appropriate size and/or shape, such as a wing, to support the first camera **104** in the first position **P1** having the first orientation **122** from which first image information **134** may be received. The housing **108** also supports the second camera **106** in the second position **P2** having the second orientation **128** from which the second image information **136** may be received. The first orientation **122** and the second orientation **128** are indicated in **FIG. 2** by axes **ORA1** and **ORA2,** representing angles of view of the respective first and second cameras **104, 106.** In some examples, the housing **108** may extend any appropriate distance from the vehicle **100** for an improved viewing angle and, as such, may be foldable to achieve a reduced width profile, as needed. In this regard, the second camera **106** may be disposed in a third position and a third orientation relative to the first camera, and the ECU **110** may determine new translation information for the different position based on the second image information **136** received in the second camera **106.** The housing **108** may comprise a plastic or metal shell or a combination thereof to protect the first camera **104** and the second camera **106** from the elements.

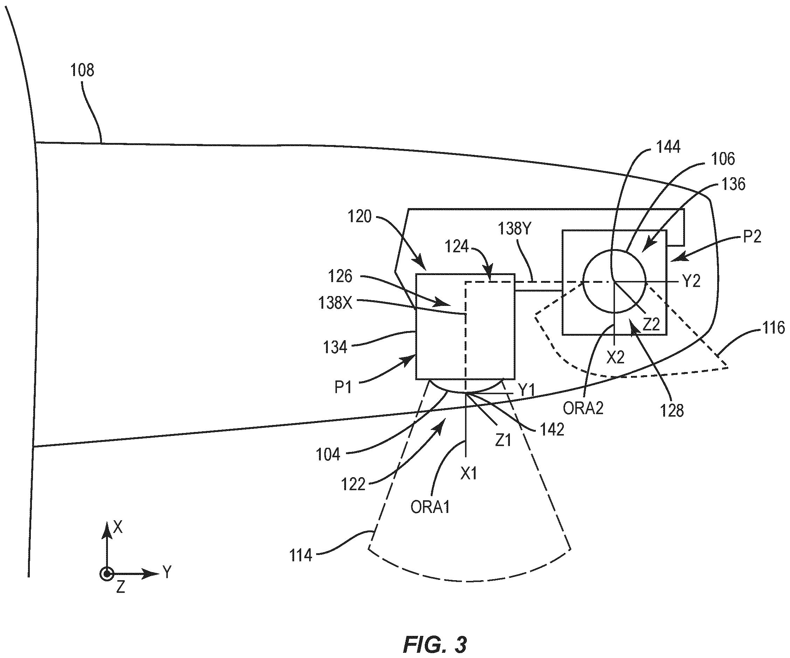

**FIG. 3** is a top view of another example of the housing **108** in **FIGS. 1A****,** **1B****,** and **2** including the first and second cameras **104, 106** in positions **P1** and **P2.** The position **P1** may be indicated by distances in three dimensions from a reference position **PREF,** which may be a fixed position relative to the vehicle **100.** The position difference **124** between the position **P1** of the first camera **104** and the position **P2** of the second camera **106** is included in the translation information **120.** The translation information **120** also includes an orientation difference **126** between the first orientation **122** of the first camera **104** and the second orientation **128** of the second camera **106.** The position difference **124** may be given as distances in three dimensions. The position difference **124** shown in **FIG. 3** includes a first distance **138X** in an X-axis direction, a second distance **138Y** in a Y-axis direction, and a third distance **138Z** in a Z-axis direction (not shown). The orientation difference **126** may be given as angles including a pitch angle **140P,** a yaw angle **140Y,** and a roll angle **140R** (not shown) between the second orientation **128** and the first orientation **122.** The pitch angle **140P,** yaw angle **140Y,** and roll angle **140R** indicate rotational angles around each of the three axes of a three-dimensional coordinate system (X-Y-Z) where the three axes are orthogonal to each other.

In **FIG. 3****,** the first orientation **122** is illustrated as an orientation of a first axis system **142** located at the position **P1** and the second orientation **128** is illustrated as an orientation of a second axis system **144** located at the position **P2.** In **FIG. 3****,** the first axis system **142** and the second axis system **144** are in a same orientation, indicating that there is a position difference **124** but no orientation difference **126.** Accordingly, the pitch **140P,** yaw **140Y,** and roll **140R** angles describing the orientation difference **126** would each have a value of zero "0" degrees in this example. In some examples, the position **P2** of the second camera **106** may be determined by adding the position difference **124** to the position **P1,** and the second orientation **128** may be determined by adding the orientation difference **126** to the first orientation **122.** Accordingly, the second calibration information **118** of the second camera 106 may be determined, in some examples, by adding the translation information **120** to the first calibration information **112.**

In this example, the first orientation **122** is indicated by the X-axis **X1** of the first axis system **142** and the second orientation **128** is indicated by the X-axis **X2** of the second axis system **144.** Here, the first orientation **122** appears to be parallel to the second orientation **128** but in other examples, such as in **FIG. 2****,** the imaging system **102** is not limited in this regard. In practice, the second axis system **144** may have a different orientation from the first axis system **142.** The first orientation **122** may be specified as rotations along one or more of the X, Y, and Z axes of the first axis system **142** relative to the reference orientation **OREF** and the second axis system **144** may be specified as pitch **140P,** yaw **140Y,** and roll **140R** of the second axis system **144** relative to the first axis system **142.**

In this manner, the translation information **120** between the first camera 104 and the second camera **106** may be precisely specified by the position difference **124** and the orientation difference **126.** Thus, the translation information **120** between the first camera **104** and the second camera **106,** along with the first calibration information **112,** can be used to generate the second calibration information **118** to calibrate the second camera **106.**

The translation information **120** may be obtained from design information of the housing **108,** which specifies the exact locations and orientations (within manufacturing tolerances) of the first camera **104** and the second camera **106** in the housing **108.** Such information may be provided to and/or available from robotic manufacturing devices configured to manufacture the housing **108.** The ECU **110** may extract the translation information **120** from such design information. The design information may be computer-aided design (CAD) information. Alternatively, to avoid or overcome variations in the housing **108** as manufactured and mounted to the vehicle **100** (e.g., due to manufacturing tolerances), the translation information **120** may be obtained by examining, measuring, and/or otherwise analyzing the housing **108.** For example, the housing **108** may be laser-scanned to create a three-dimensional model that can be compared to the original design to evaluate manufacturing practices. Translation information **120** with a high level of precision may be obtained therefrom.

The translation information **120** may be used to generate a calibrated image **146** (not shown) based on the second image information **136** and the second calibration information **118.** The calibrated image **146** provides a view to the driver or image processor from an expected perspective. The translation information **120** may be stored in and received from a memory circuit **148** that is accessible to the processing circuit **130** (ECU **110)** (see **FIGS. 1A-****1B)** to perform the calibration of the second camera **106.** The translation information **120** may be received from a manufacturer or distributor of the housing **108,** for example. The first calibration information **112** may be stored in and received from a memory accessible to the ECU **110.** In some examples, the translation information **120** may be used to adjust the second position **P2** and/or the second orientation **128** of the second camera **106** in the housing **108,** if the housing **108** provides the option for such adjustments. The ECU **110** includes a memory circuit **148** that is configured to store any of the first calibration information **112,** the second calibration information **118,** the translation information **120,** the first image information **134,** the second image information **136,** and the calibrated image **146.**

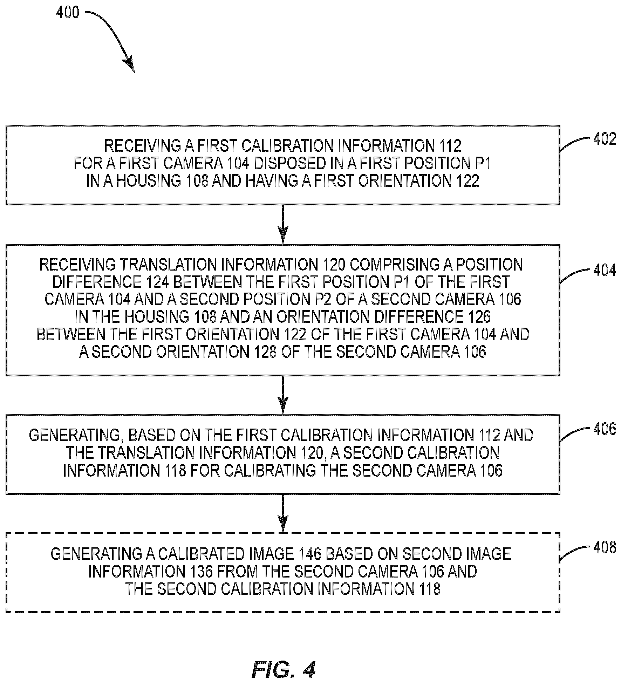

**FIG. 4** is a flow chart of a method **400** of the imaging system **102** in **FIGS. 1A** and **1B****,** which may be implemented in the ECU **110.** The method **400** includes receiving a first calibration information **112** for a first camera **104** disposed in a first position **P1** in a housing **108** and having a first orientation **122** (block **402).** The method **400** further includes receiving translation information **120** comprising a position difference **124** between the first position **P1** of the first camera **104** and a second position **P2** of a second camera **106** in the housing **108** and an orientation difference **126** between the first orientation **122** of the first camera **104** and a second orientation **128** of the second camera **106** (block **404).** The method **400** further includes generating, based on the first calibration information **112** and the translation information **120,** a second calibration information **118** for calibrating the second camera **106** (block **406).** The method **400** may further include, in some examples, generating a calibrated image **146** based on the second image information **136** and the second calibration information **118** (block **408).** In some examples, the method **400** may optionally include repositioning the second camera **106** to change the second orientation **128** based on the second calibration information **118.**

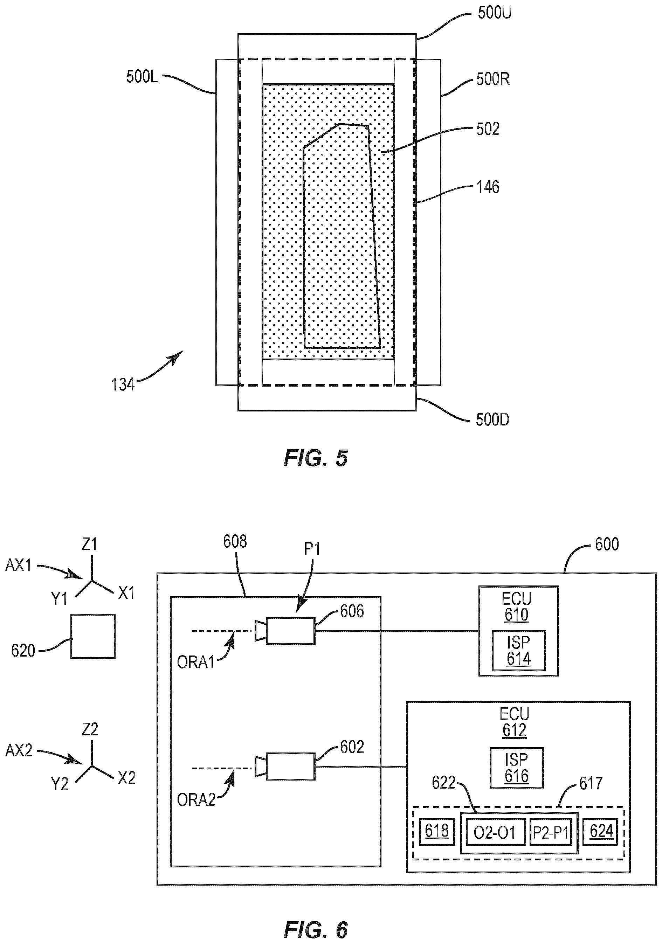

**FIG. 5** shows examples of overlaid images **500L, 500R, 500U,** and **500D** that may be received in, for example, the first camera **104** of **FIGS. 1A-3** due to variations caused by manufacturing tolerances in processes of manufacturing the housing **108.** **FIG. 5** is provided to illustrate the need for calibration of the first camera **104** and the second camera **106** in **FIGS. 1A-3****.** A target area **502** of the first camera **104** is indicated as a shaded portion. The images **500L, 500R, 500U,** and **500D** are each examples of image information **134** resulting from a shift in the position **P1** or orientation **122** of the first camera **104,** causing the target area **502** to be offset from a center of the first image information **134.** **FIG. 5** shows that, rather than being centered on the target area **502,** the image **500L** is offset to the left, the image **500R** is offset to the right, the image **500U** is offset upward, and the image **500D** is offset downward from the target area **502.** The target area **502** is included in, but not centered in, each of the images **500L, 500R, 500U,** and **500D.** The ECU **110** can shift the images **500L, 500R, 500U,** and **500D** to center the target area **502** in the calibrated image **146** based on the first calibration information **112,** to ensure that a view from the first camera **104** is provided as expected. Centering a target area **502** in the calibrated image **146** may include spacing the target area by equal distances from the top and bottom and by equal distances from the left and right, for example.

Each of the images **500L, 500R, 500U,** and **500D** is offset from the target area **502** in only one direction, for purposes of explanation. However, the target area **502** may be offset in both the left/right direction and the up/down direction in a received image. In other examples, the image may be rotated clockwise or counterclockwise. With reference back to **FIGS. 1A** and **1B****,** the first calibration information **112** may indicate the extents and directions of offset of the image received from the first camera **104** in the ECU **110** due to imperfections in the housing **108** and/or the mounting position of the first camera **104,** and the first calibration information **112** may be used in the ECU **110** to generate the calibrated image **146.** In this regard, the calibrated image **146** refers to an image based on the received image but which has been shifted, rotated, and/or cropped to provide an expected view of the target area **502.**

Since the position **P2** and second orientation **128** of the second camera **106** may be fixed relative to the first camera **104,** the first calibration information **112** is used by the ECU **110** together with the translation information **120** to identify a target area (e.g., **502)** within the second image information **136** received in the second camera **106,** so that the target area **502** may be optimized (e.g., centered and zoomed) for display and/or analysis. Alternatively, if the second orientation **128** of the second camera **106** is adjustable in the housing **108,** the first calibration information **112** may be used together with the translation information **120** to adjust the second camera **106** so that the second orientation **128** is focused to the target area **502.**

**FIG. 6** is a schematic diagram of an imaging system **600** in which a second camera **602** may be calibrated based on calibration information **604** of a first camera **606** that is located in a housing **608.** The imaging system **600** in this example includes a first ECU **610** coupled to the first camera **606** and a second ECU **612** coupled to the second camera **602.** In some examples, the first camera **606** and the second camera **602** are both coupled to a same ECU (e.g., **612).** The ECUs **610** and **612** may be the ECU **110** in **FIGS. 1A** and **1B****.** The ECUs **610, 612** include ISPs **614, 616,** respectively, configured to execute software to process image information received from the first camera **606** and the second camera **602** and also to execute software to process calibration data **617** used to calibrate the first camera **606** and the second camera **602,** respectively. In this example, the calibration data **617** includes first calibration information **618** for the first camera **606** based on a calibration process employing a calibration apparatus **620.** The first camera **606** has a first orientation **O1** and a first position **P1,** which may be aligned with a first axis system **AX1.** An orientation **O2** and a second position **P2** of the second camera **602** may be aligned with the second axis system **AX2.** The ECU **612** may receive the first calibration information **618** for the first camera **606** and receive translation information **622** indicating position differences **P2-P1** and orientation differences **O2-O1** between the first camera **606** and the second camera **602.** The position difference **P2-P1** includes distances in three dimensions between the positions **P1** and **P2.** The orientation difference **O2-O1** includes pitch, yaw, and roll angles between the first orientation **O1** and the second orientation **02.** Based on the first calibration information **618** and the translation information **622,** the ECU **612** may generate second calibration information **628.** Specifically, the ECU **612** may determine the second calibration information **628** of the second camera **602** by adding the translation information **622** to the first calibration information **618.**

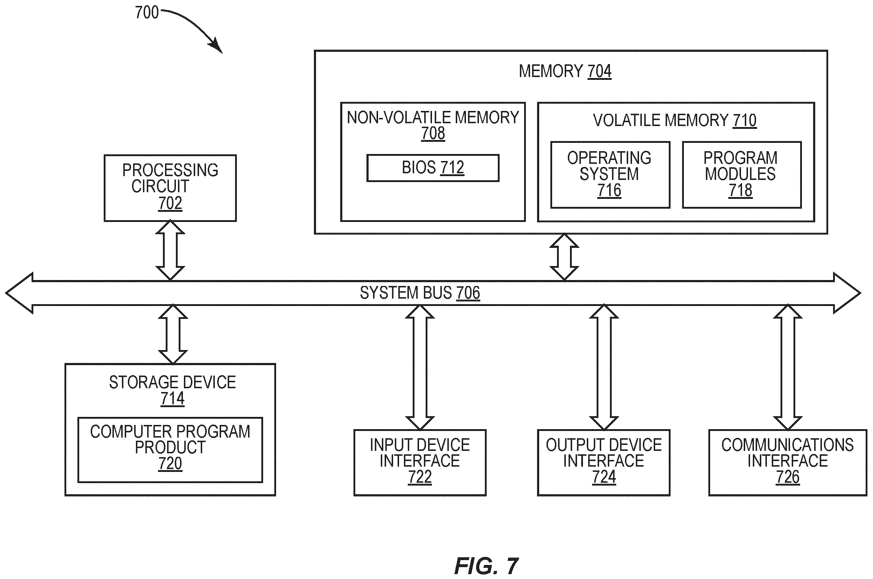

**FIG. 7** is a schematic diagram of a computer system **700** that may be the ECU **110** in **FIGS. 1A** and **1B** or the ECUs **610, 612** in **FIG. 6** for implementing examples disclosed herein. The computer system **700** is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuit 702 (e.g., processing circuitry including one or more processor devices or control units), a memory **704,** and a system bus **706.** The computer system **700** may include at least one computing device having the processing circuit 702. The system bus **706** provides an interface for system components including, but not limited to, the memory **704** and the processing circuit 702. The processing circuit 702 may include any number of hardware components for conducting data or signal processing or for executing computer code stored in memory **704.** The processing circuit 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuit 702 may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuit 702 (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuit 702. A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like. The non-transitory computer-readable

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuit 702 to carry out actions described herein. Thus, the computer-readable program code of the computer program **720** can comprise software instructions for implementing the functionality of the examples described herein when executed by the processing circuit 702. In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuit 702. The processing circuit 702 may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuit 702 through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Implementation examples are described in the following numbered clauses:
Example 1: A vehicle comprising an imaging system, comprising:
   a housing mounted to the vehicle;
   a first camera disposed in a first position in the housing and a first orientation relative to the first position;
   a second camera disposed in a second position in the housing and a second orientation relative to the second position; and
   a processing circuit configured to:
      receive a first calibration information for the first camera;
      receive translation information comprising:
         a position difference between the first position of the first camera and the second position of the second camera; and
         an orientation difference between the first orientation and the second orientation; and
      generate, based on the first calibration information and the translation information, a second calibration information for calibrating the second camera.
Example 2: The vehicle of Example 1, wherein:
   the second camera is configured to receive second image information; and
   the processing circuit is further configured to:
      generate calibrated second image information based on the second image information and the second calibration information.
Example 3: The device of Example 2, wherein the processing circuit is further configured to:
   generate the calibrated second image comprising a target area of the second image information; and
   center the target area in the calibrated image based on the second calibration information.
Example 4: The device of Example 1, wherein:
   the first camera comprises an advanced driving assistance system (ADAS) camera; and
   the second camera comprises a camera-monitor system (CMS) camera.
Example 5: The device of Example 1, wherein wherein the translation information comprises design information for manufacturing the housing.
Example 6: The device of Example 2, wherein the processing circuit is further configured to:
   receive first image information from the first camera; and
   generate the translation information based on the first image information and the second image information.
Example 7: The device of Example 2, wherein:
   the position difference comprises distances in three directions that are orthogonal to each other between the first position and the second position.
Example 8: The device of Example 1, wherein:
   the orientation difference comprises a pitch angle, a yaw angle, and a roll angle between the first orientation and the second orientation.
Example 9: The device of Example 1, wherein the second position of the second camera comprises:
   a position difference between the first position of the first camera and a reference position; and
   a position difference between the second position of the second camera and the first position of the first camera.
Example 10: The device of Example 1, wherein the second orientation of the second camera comprises:
   an orientation difference between the first camera and a reference orientation; and
   an orientation difference between the second camera and the first camera.
Example 11: The device of Example 1, wherein the housing is attached to one of a driver side and a passenger side of the vehicle.
Example 12: A method for calibrating a camera, comprising:
   receiving a first calibration information for a first camera disposed in a first position in a housing and having a first orientation;
   receiving translation information comprising:
      a position difference between the first position of the first camera and a second position of a second camera disposed in the housing; and
      an orientation difference between the first orientation of the first camera and a second orientation of the second camera; and
   generating, based on the first calibration information and the translation information, a second calibration information for calibrating the second camera.
Example 13: The method of Example 12, further comprising:
   receiving a second image information from the second camera; and
   generating a calibrated image based on the second image information and the second calibration information.
Example 14: The method of Example 13, further comprising:
   generating the calibrated image based on a target area of the second image information; and
   centering the target area in the calibrated image based on the second calibration information.
Example 15: The method of Example 12, further comprising extracting the translation information from design information for manufacturing the housing.
Example 16: The method of Example 12, further comprising examining the housing to determine the translation information.
Example 17: The method of Example 12, further comprising determining the translation information based on differences between the first image information and the second image information.
Example 18: The method of Example 12, further comprising determining the second position of the second camera, comprising:
   determining a position difference between the first position of the first camera and a reference position; and
   determining a position difference between the second position of the second camera and the first position of the first camera.
Example 19: The method of Example 12, further comprising determining the second orientation, comprising of the second camera:
   determining an orientation difference between the first camera and a reference orientation; and
   determining an orientation difference between the second camera and the first camera.
Example 20: A non-transitory computer-readable storage medium comprising instructions, which when executed by processing circuit, cause the processing circuit to:
   receive a first calibration information for a first camera disposed in a first position in a housing and having a first orientation;
   receive translation information comprising:
      a position difference between the first position of the first camera and a second position of a second camera disposed in the housing; and
      an orientation difference between the first orientation of the first camera and a second orientation of the second camera; and
   generate, based on the first calibration information and the translation information, a second calibration information for calibrating the second camera.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vehicle comprising an imaging system, comprising:
a housing (108) mounted to the vehicle (100);
a first camera (104) disposed in a first position (P1) in the housing (108) and a first orientation (122) relative to the first position (P1);
a second camera (106) disposed in a second position (P2) in the housing (108) and a second orientation (128) relative to the second position (P2); and
a processing circuit (130) configured to:
receive a first calibration information (112) for the first camera (104);
receive translation information (120) comprising:
a position difference (124) between the first position (P1) of the first camera (104) and the second position (P2) of the second camera (106); and
an orientation difference (126) between the first orientation (122) and the second orientation (128); and
generate, based on the first calibration information (112) and the translation information (120), a second calibration information (118) for calibrating the second camera (106).

2. The vehicle (100) of any preceding claim, wherein:
the second camera (106) is configured to receive second image information; and
the processing circuit (130) is further configured to:
generate calibrated second image information based on the second image information and the second calibration information (118).

3. The vehicle (100) of claim 2, wherein the processing circuit (130) is further configured to:
generate the calibrated second image comprising a target area of the second image information; and
center the target area in the calibrated image based on the second calibration information (118).

4. The vehicle (100) of any preceding claim, wherein:
the first camera (104) comprises an advanced driving assistance system (ADAS) camera; and
the second camera (106) comprises a camera-monitor system (CMS) camera.

5. The vehicle (100) of any preceding claim, wherein the translation information (120) comprises design information for manufacturing the housing (108).

6. The vehicle (100) of claim 2, wherein the processing circuit (130) is further configured to:
receive first image information from the first camera (104); and
generate the translation information (120) based on the first image information and the second image information.

7. The vehicle (100) of claim 2, wherein the position difference (124) comprises distances in three directions that are orthogonal to each other between the first position (P1) and the second position (P2).

8. The vehicle (100) of any preceding claim, wherein the orientation difference (126) comprises a pitch angle, a yaw angle, and a roll angle between the first orientation (122) and the second orientation (128).

9. The vehicle (100) of any preceding claim, wherein the second position (P2) of the second camera (106) comprises:
a position difference (124) between the first position (P1) of the first camera (104) and a reference position; and
a position difference (124) between the second position (P2) of the second camera (106) and the first position (P1) of the first camera (104).

10. The vehicle (100) of any preceding claim, wherein the second orientation (128) of the second camera (106) comprises:
an orientation difference (126) between the first camera (104) and a reference orientation; and
an orientation difference (126) between the second camera (106) and the first camera (104).

11. The vehicle (100) of any preceding claim, wherein the housing (108) is attached to one of a driver side and a passenger side of the vehicle (100).

12. A method for calibrating a camera, comprising:
receiving a first calibration information (112) for a first camera (104) disposed in a first position (P1) in a housing (108) and having a first orientation (122);
receiving translation information (120) comprising:
a position difference (124) between the first position (P1) of the first camera (104) and a second position (P2) of a second camera (106) disposed in the housing (108); and
an orientation difference (126) between the first orientation (122) of the first camera (104) and a second orientation (128) of the second camera (106); and
generating, based on the first calibration information (112) and the translation information (120), a second calibration information (118) for calibrating the second camera (106).

13. The method of claim 12, further comprising:
receiving a second image information from the second camera (106); and
generating a calibrated image based on the second image information and the second calibration information (118).

14. The method of claim 13, further comprising:
generating the calibrated image based on a target area of the second image information; and
centering the target area in the calibrated image based on the second calibration information (118).

15. A non-transitory computer-readable storage medium (714) comprising instructions, which when executed by a processing circuit (702), cause the processing circuit (702) to:
receive a first calibration information (112) for a first camera (104) disposed in a first position (P1) in a housing (108) and having a first orientation (122);
receive translation information (120) comprising:
a position difference (124) between the first position (P1) of the first camera (104) and a second position (P2) of a second camera (106) disposed in the housing (108); and
an orientation difference (126) between the first orientation (122) of the first camera (104) and a second orientation (128) of the second camera (106); and
generate, based on the first calibration information (112) and the translation information (120), a second calibration information (118) for calibrating the second camera (108).
